Europäisches Patentamt

European Patent Office

Office européen des brevets

(19)

(11) Numéro de publication: **0 069 171**
**B1**

(12) FASCICULE DE BREVET EUROPEEN

(45) Date de publication du fascicule du brevet:
**02.04.86**

(21) Numéro de dépôt: **81200721.9**

(22) Date de dépôt: **25.06.81**

(51) Int. Cl.⁴: **H 02 P 3/18**

(54) **Dispositif de pilotage par variation de la polarité aux bornes d'un onduleur alimentant une machine asynchrone.**

(43) Date de publication de la demande:
**12.01.83 Bulletin 83/2**

(45) Mention de la délivrance du brevet:
**02.04.86 Bulletin 86/14**

(84) Etats contractants désignés:
**AT BE DE FR GB NL**

(56) Documents cités:
**CH - B - 419 300**
**DE - A - 1 513 532**
**DE - A - 2 800 928**
**FR - A - 2 259 477**
**FR - A - 2 333 372**

**ZEITSCHRIFT FÜR EISENBAHNWESEN UND VERKEHRSTECHNIK, Glasers Annalen, vol. 96, no. 1, janvier 1972 BERLIN (DE) K.S. STOTZER: "Elektrische Bremsen moderner Wechselstrom-Triebfahrzeuge", pages 23 à 29**

(73) Titulaire: **ATELIERS DE CONSTRUCTIONS ELECTRIQUES DE CHARLEROI (ACEC) Société Anonyme, Avenue Lloyd George 7, B-1050 Bruxelles (BE)**

(72) Inventeur: **Detemmerman, Bernard, Rue Allard Cambier, B-6158 Pieton (BE)**

## Description

L'invention concerne un dispositif de pilotage par variation de la polarité aux bornes d'un onduleur alimentant une machine asynchrone. Dès qu'une inversion de couple est demandée, ce dispositif impose une configuration propre à la phase transitoire pour isoler le hacheur de la source de tension continue et inverser les polarités aux bornes de l'onduleur par variations alternatives du signe affectant la valeur modulaire de la pulsation rotorique par un élément régulateur de courant.

Lorsque, dans une machine à courant continu, on réalise le passage d'une configuration de traction à une configuration de freinage, en utilisant des contacteurs basculés uniquement en l'absence de courant, on interrompt d'abord l'alimentation de la machine à courant continu en bloquant les hacheurs pendant la commutation des contacteurs. On réexcite, ensuite, la machine à l'aide d'un dispositif de prémagnétisation jusqu'à ce qu'elle soit à nouveau capable d'entretenir son propre flux.

La transposition de cette technique en machine asynchrone ne peut pratiquement pas s'envisager en traction électrique tant un dispositif auxiliaire remplissant la même fonction serait encombrant et compliqué. Une autre possibilité, valable uniquement pour les grosses machines asynchrones serait d'annuler le courant et de basculer les contacteurs pour mettre le circuit en configuration de freinage en un temps très court. On dispose en effet d'une constante de temps de l'ordre de la seconde pendant laquelle subsiste un flux suffisant pour amorcer le fonctionnement en génératrice. Cette solution ne présente guère les garanties de sécurité requises et n'est pas applicable à des machines asynchrones de moindre puissance dont la constante de temps rotorique est de l'ordre du dixième de seconde.

Un autre moyen utilisé consiste à changer la configuration du circuit sans attendre l'annulation du courant continu. Cette opération est rendue délicate par l'utilisation de contacteurs rapides souvent générateurs de surtensions aux bornes des différents composants électroniques. De plus, ces composants demandent des inspections et des entretiens fréquents pour conserver un niveau de fiabilité acceptable.

La présente invention se réfère à un dispositif de pilotage selon le préambule de la revendication 1 tel qu'il est connu du document FR-A-2 333 312. Ce document décrit un circuit de commande prévu, en particulier, pour le freinage rhéostatique d'un moteur à courant alternatif, alimenté à partir d'un onduleur de courant, en contrôlant la puissance dissipée dans la résistance de freinage afin d'assurer le développement d'un couple constant lors de l'opération de freinage. Dans ce circuit, l'ouverture et la fermeture des commutateurs sont simplement coordonnés à un inverseur, qui permet de passer de la position de traction à la position de freinage. De ce fait les commutateurs risquent de se dégrader plus rapidement et doivent faire l'objet d'inspections plus fréquentes.

L'invention telle qu'elle est proposée dans la revendication 1 supprime les inconvénients précités.

Elle fait intervenir un artifice de commande qui comporte une suite de séquences permettant à un circuit approprié de déconnecter la source de tension continue et de prendre la configuration adaptée au freinage pendant que, par pilotage électronique, les polarités aux bornes de l'onduleur sont inversées pour maintenir le courant circulant dans la self de lissage, montée entre le hacheur et l'onduleur, à un niveau moyen prédéterminé.

L'invention sera explicitée dans ses détails à l'aide des figures suivantes:

Les figures 1, 2, 3, 4 et 6 à 13 montrent l'ensemble de l'installation respectivement en phase de traction, de transition et de freinage rhéostatique.

La figure 5 illustre l'évolution du courant moyen dans la self de lissage $L_s$ en regard de l'évolution de la valeur de pilotage de la pulsation statorique $\omega_1$.

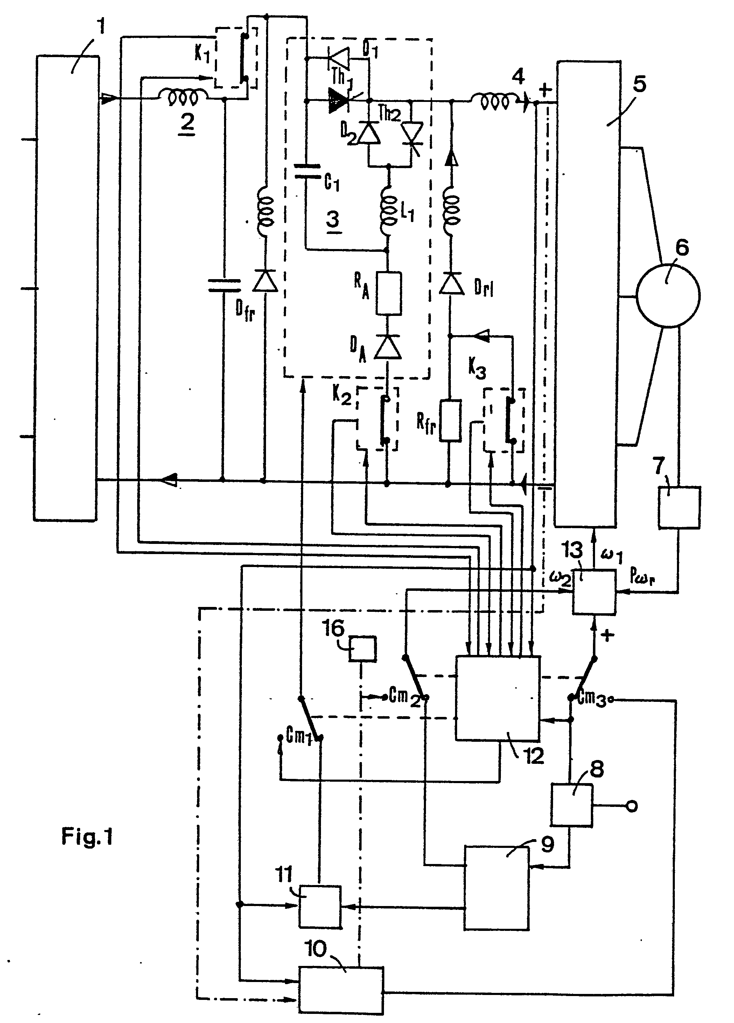

La figure 1 représente un redresseur 1 à diodes qui, par l'intermédiaire d'un filtre 2, est relié à un hacheur 3 lui-même raccordé à un onduleur 5 par une self de lissage 4.

L'onduleur 5 est relié à une machine asynchrone 6 dont la vitesse de rotation est relevée par un capteur de vitesse 7.

L'opérateur modifie à volonté le couple de traction demandé au moteur asynchrone 6 en agissant sur le poste 8 qui répercute l'information vers le poste 9 pour imposer le point de fonctionnement de la machine.

Dans la figure 1, représentant l'installation en configuration de traction, le courant qui traverse l'onduleur 5 et le moteur asynchrone 6 parcourt le circuit formé soit par le redresseur 1 lorsque le hacheur 3 conduit, soit par la diode de roue libre $D_{rl}$ lorsque le hacheur 3 est bloqué. Le rapport cyclique réglable permet au hacheur 3 de modifier le courant dans la self de lissage 4 et de faire varier ainsi le couple de traction du moteur asynchrone 6. Le circuit de commande comprenant tous les postes numérotés de 7 à 13, 16 répond, en phase traction, à l'équation $\omega_1 = P\omega_R + \omega_2$ dans laquelle $\omega_1$ est la pulsation statorique générée en l'élément synthétiseur 13, $\omega_2$ la pulsation rotirique, réglable en valeur modulaire par l'élément calculateur du point de fonctionnement 9, et $P\omega_r$ la mesure de la vitesse de rotation de l'arbre du moteur asynchrone 6 faite par le capteur de vitesse 7. Le signe + affectant $\omega_2$ dépend du signe du couple de traction demandé à l'élément conformateur 8 depuis le poste de commande.

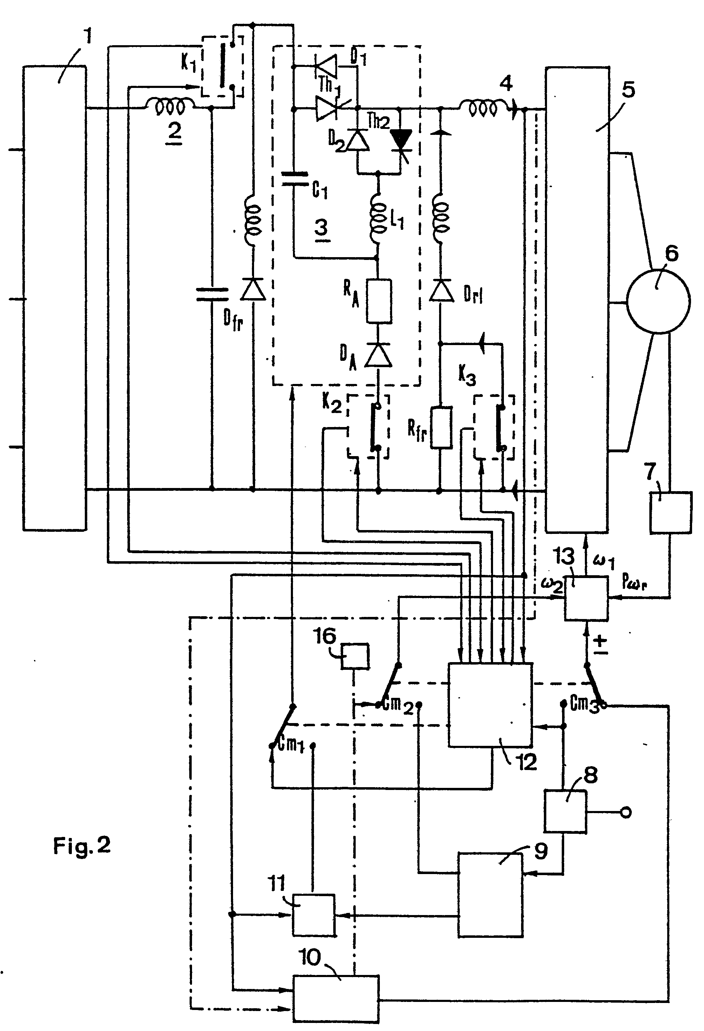

La figure 2 représente la première séquence de la phase de transition. Lorsque l'opérateur désire faire intervenir le frein rhéostatique en actionnant le levier de commande, il agit sur l'élément conformateur 8 qui, dès l'inversion de signe du couple électromagnétique souhaité, met l'installation en phase transitoire.

Dès ce moment, des circuits de commande vont intervenir simultanément pour, d'une part, déconnecter le hacheur 3 de la source à tension continue, le redresseur 1, et brancher le hacheur 3 en parallèle sur la résistance rhéostatique de freinage Rfr via une diode de freinage Dfr et, d'autre part, inverser les polarités aux bornes de l'onduleur pour faire circuler un courant dans la self de lissage 4 capable d'entretenir un flux suffisant dans la machine asynchrone 6.

Dans un but de clarté, nous analyserons ces différentes actions les une après les autres, étant bien entendu que dans la réalité leur déroulement est simultané.

Dès que l'opérateur actionne le levier de commande pour réclamer le freinage, sa manœuvre, correspondant à une inversion de la consigne du couple, est enregistrée en l'élément conformateur 8, et l'élément séquenceur 12 impose au dispositif de commande la configuration propre à la phase transitoire par basculement des trois commutateurs $Cm_1$, $Cm_2$, $Cm_3$. L'allumage du thyristor auxiliaire $Th_2$ provoque la fermeture du circuit d'extinction $C_1L_1$ et l'établissement d'un courant qui entraîne l'extinction du thyristor principal $Th_1$. Dès que le thyristor principal $Th_1$ ne conduit plus, on ouvre le contacteur $K_1$ pour isoler le hacheur 3 de la source de tension continue, le redresseur 1.

A cause de la caractéristique selfique du circuit, renforcée notamment par la présence de la self de lissage 4, le courant ne s'annule pas instantanément et continue à circuler en passant par la diode de roue libre Drl.

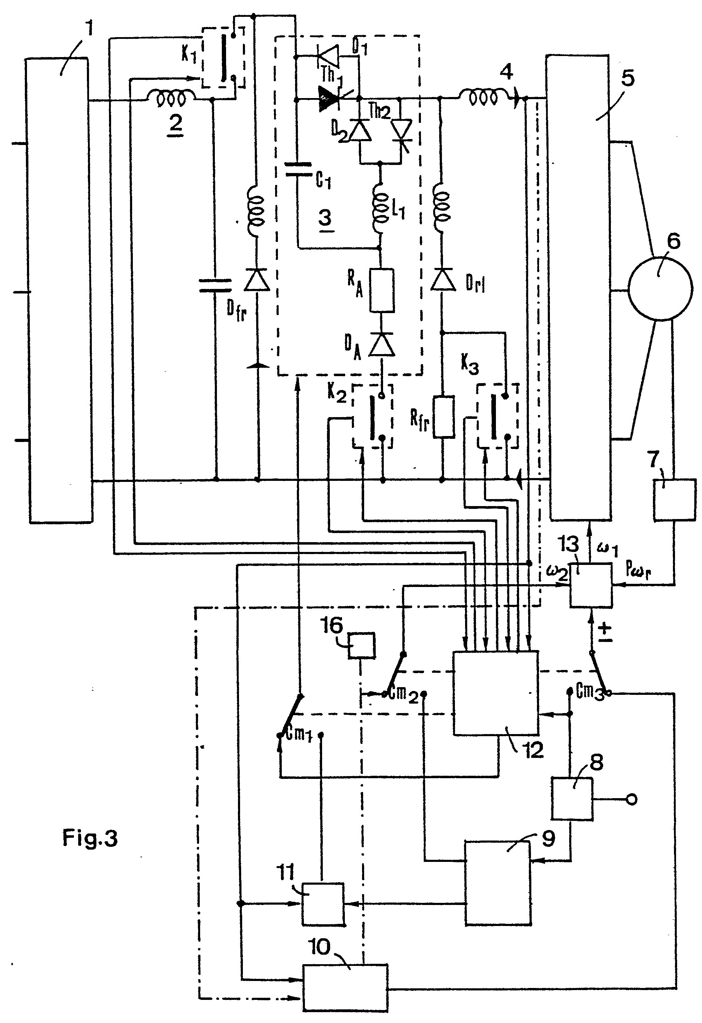

La figure 3 correspond à la deuxième séquence de la phase transitoire. Elle représente l'installation à partir du moment où, en allumant à nouveau le thyristor principal $Th_1$ tout en inhibant la commande du circuit d'extinction, on offre au courant la possibilité de passer à travers la diode de freinage $Df_r$. On peut dès lors ouvrir simultanément les contacteurs $K_2$ et $K_3$.

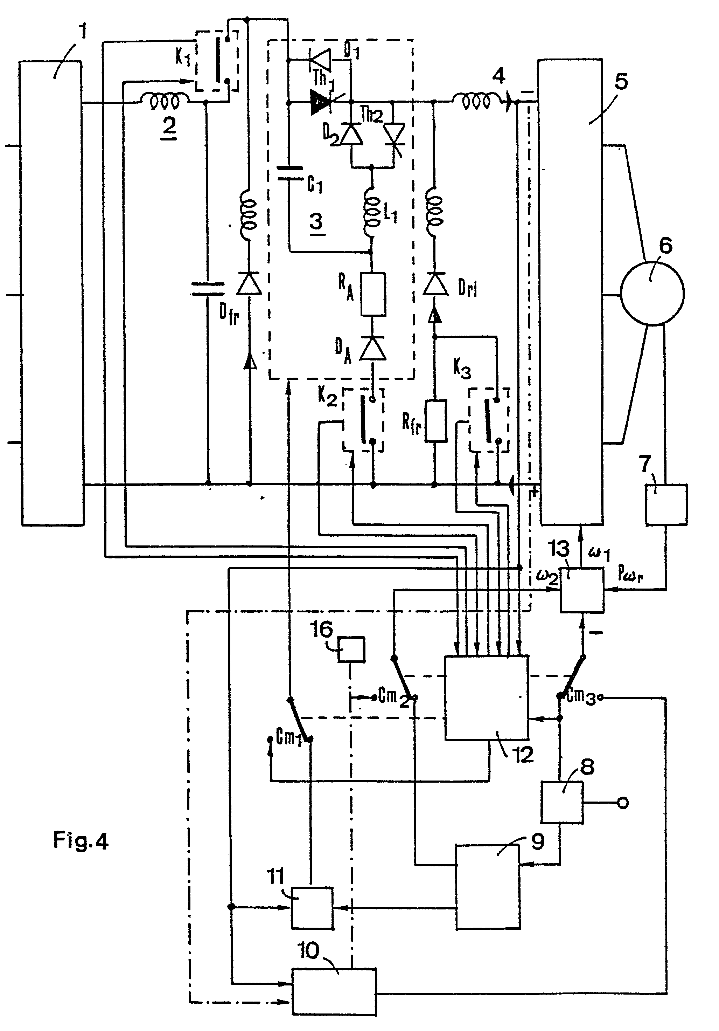

La figure 4 représente l'installation en phase de freinage. Cette phase débute dès que les contacteurs $K_2$ et $K_3$ sont ouverts. A partir de ce moment, le circuit d'extinction du hacheur 3 piloté par le régulateur de courant 11 dans la self de lissage 4 est remis en service. Les commutateurs $Cm_1$, $Cm_2$, $Cm_3$ sont basculés pour retrouver leur position normale et le hacheur travaille à nouveau normalement c'est-à-dire que par blocages et déblocages successifs du thyristor principal $Th_1$, on alterne le passage du courant soit dans la diode de freinage $Df_r$, soit dans la résistance rhéostatique de freinage $R_{fr}$ pour disposer ainsi d'un freinage rhéostatique contrôlé.

Pendant les deux séquences de la phase transitoire exposées respectivement dans les figure 2 et 3, le dispositif de commande a été mis en configuration de transition par l'élément 12 pour répondre à l'équation $\omega_1 = P\omega_r \pm \omega_2$ dans laquelle $\omega_2$, est, dans le cas le plus simple, maintenu à une valeur fixe par l'élément à consigne constante 16. Durant cette phase transitoire le signe de $\omega_2$ est rendu alternativement positif et négatif selon la valeur du courant mesurée dans la self de lissage 4 et comparée par exemple dans l'élément régulateur de courant 10 utilisé en période transitoire à deux seuils prédéterminés.

Tout au long de cette phase transitoire, aussi longtemps que tourne la machine asynchrone 6, l'onduleur 5, déconnecté de la source de tension continue, le redresseur 1, est piloté par l'élément synthétiseur 13 qui applique une consigne de pulsation statorique $\omega_1$, alternativement supérieure ou inférieure à la mesure de vitesse $P\omega_r$ relevée par le capteur de vitesse 7.

Il est à remarquer que durant la phase transitoire, la pulsation rotorique $\omega_2$ peut être réglée de deux façons différentes. Dans une première manière d'opérer, la pulsation rotorique $\omega_2$ est une valeur fixe, fournie par l'élément à consigne constante 16 pendant la phase transitoire. La seconde manière de régler la pulsation rotorique $\omega_2$ consiste à imposer une valeur déterminée selon les variations enregistrées par l'élément régulateur de courant 10 utilisé en régime transitoire.

Notons que l'élément régulateur de courant 10 peut être constitué par la mise en cascade de la régulation de courant précitée et d'une régulation de tension à l'entrée de l'onduleur dont la consigne serait la sortie du régulateur de courant 10, utilisé en régime transitoire. Cette manière de procéder permet un réglage plus efficace de la fréquence rotorique lors du fonctionnement en régime de transition.

Des traits mixtes rappellent, dans les différentes figures, cette double possibilité du réglage de la pulsation rotorique $\omega_2$.

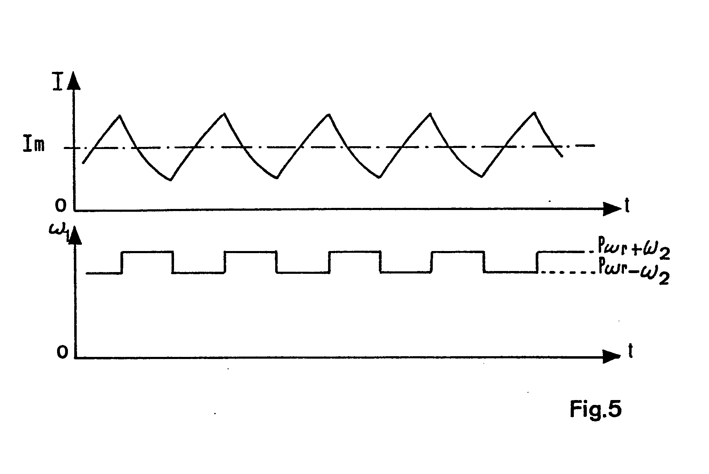

La figure 5 montre que, dans le cas où l'on réalise l'addition de la valeur généralement constante $\omega_2$ à la valeur mesurée $P\omega_r$, la machine à induction fonctionnant en moteur impose la décroissance du courant unidirectionnel dans la self de lissage 4.

Cette même figure 5 montre encore que dès que l'amplitude de ce courant devient inférieure à un seuil fixé on effectue la soustraction du terme généralement constant $\omega_2$ de la valeur mesurée $P\omega_r$ de manière que la machine, fonctionnant en génératrice, réalise la conversion de l'énergie cinétique des masses en rotation en énergie électrique et impose, via l'onduleur 5 dont la tension aux bornes s'est inversée, l'augmentation du courant qui circule dans la self de lissage 4. Quand l'amplitude du courant circulant dans la self de lissage 4 atteint le seuil supérieur on effectue à nouveau l'addition de $\omega_2$ et de $P\omega_r$ pour faire fonctionner la machine en moteur et réduire à nouveau le courant circulant dans la self 4. Cette opération peut être répétée aussi longtemps que la tension aux bornes de l'onduleur 5 est suffisante, c'est-à-dire aussi longtemps que la machine asynchrone 6 tourne à une vitesse suffisante. Elle se traduit en fin de compte par une suite de changements de polarité aux bornes de l'onduleur 5.

Le volant d'inertie des masses en rotation procure un temps largement suffisant pour mettre le circuit en configuration de freinage par l'ouverture des trois contacteurs $K_1$, $K_2$ et $K_3$ isolant le ha-

cheur 3 du redresseur 1 et la mise en parallèle de la résistance de freinage $R_{f_r}$ sur le hacheur 3.

Lors du passage du freinage à la traction, l'opération est commandée au départ de l'élément conformateur 8 par une nouvelle inversion du couple demandé. L'élément calculateur du point de fonctionnement 9 impose alors une consigne de courant nulle.

Après avoir vérifié l'annulation du courant dans la machine asynchrone, l'élément séquenceur 12 commande la fermeture simultanée des contacteurs $K_1$, $K_2$ et $K_3$ et, ensuite, autorise un nouveau processus de démarrage même si la machine est en rotation.

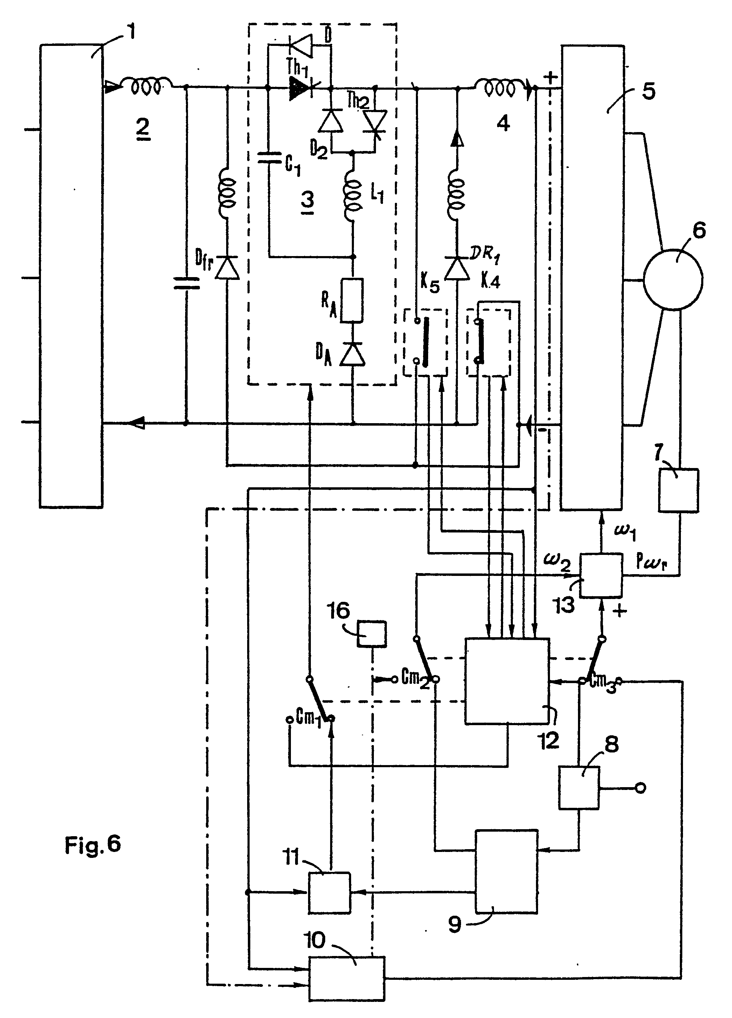

Une autre application du dispositif de pilotage par variation de la polarité aux bornes de l'onduleur revendiqué dans cette invention est relative au freinage par récupération utilisé dans les applications de traction électrique. Les différentes phases de la manœuvre sont reprises dans les figures 6, 7, 8 et 9.

La figure 6 représente en phase de traction l'ensemble d'une installation adaptée au freinage par récupération.

Ce schéma se distingue par le montage, en parallèle sur la diode de freinage $Df$, via le hacheur 3 d'un contacteur $K_5$ dimensionné pour couper des courants de faible valeur. Quant au contacteur $K_4$, il permet, par son ouverture, l'inversion des liaisons des bornes d'entrée de l'onduleur aux potentiels positif et négatif du condensateur du filtre d'entrée. Dans ce mode de freinage, la machine asynchrone fonctionne en génératrice et l'énergie qu'elle engendre est renvoyée dans le réseau.

En configuration de traction le contacteur $K_4$ est fermé, le contacteur $K_5$ est ouvert. De la sorte, le courant traversant l'onduleur 5 et la machine asynchrone 6 parcourt soit le circuit formé par le redresseur 1 lorsque le hacheur 3 conduit, soit passe par la diode de roue libre $DR_1$ lorsque le hacheur est bloqué.

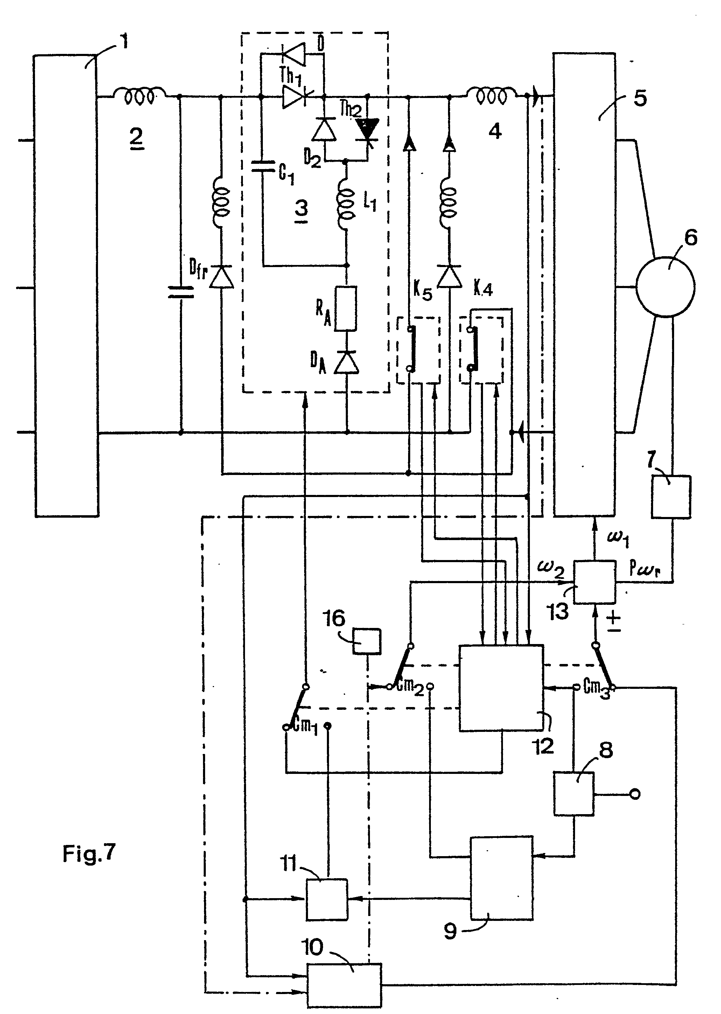

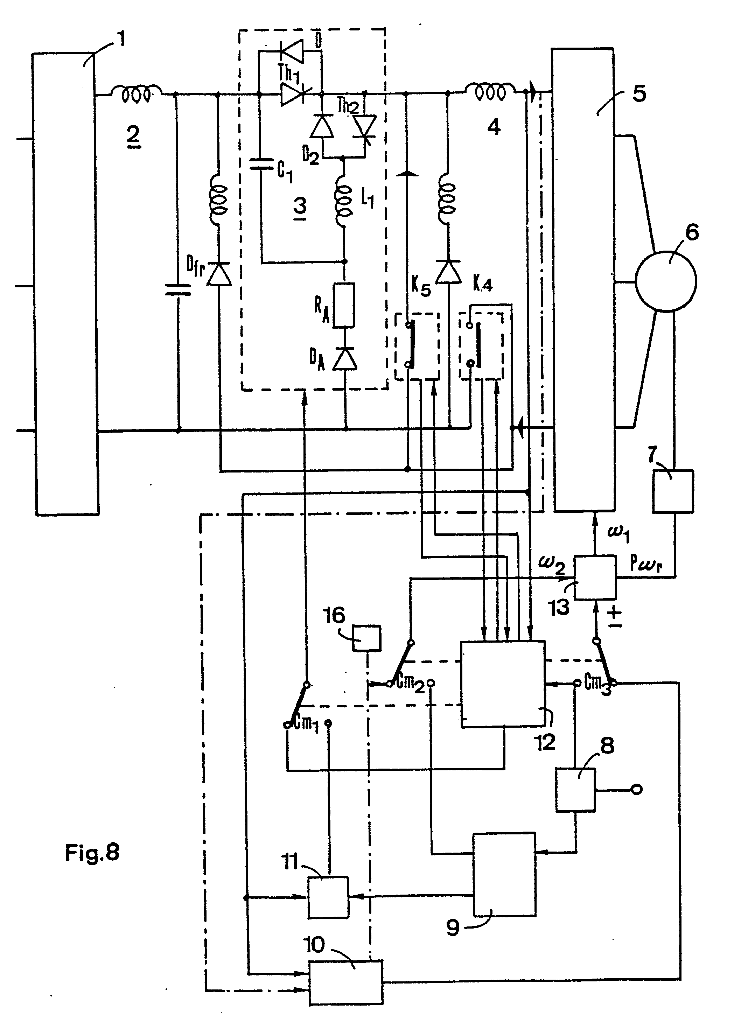

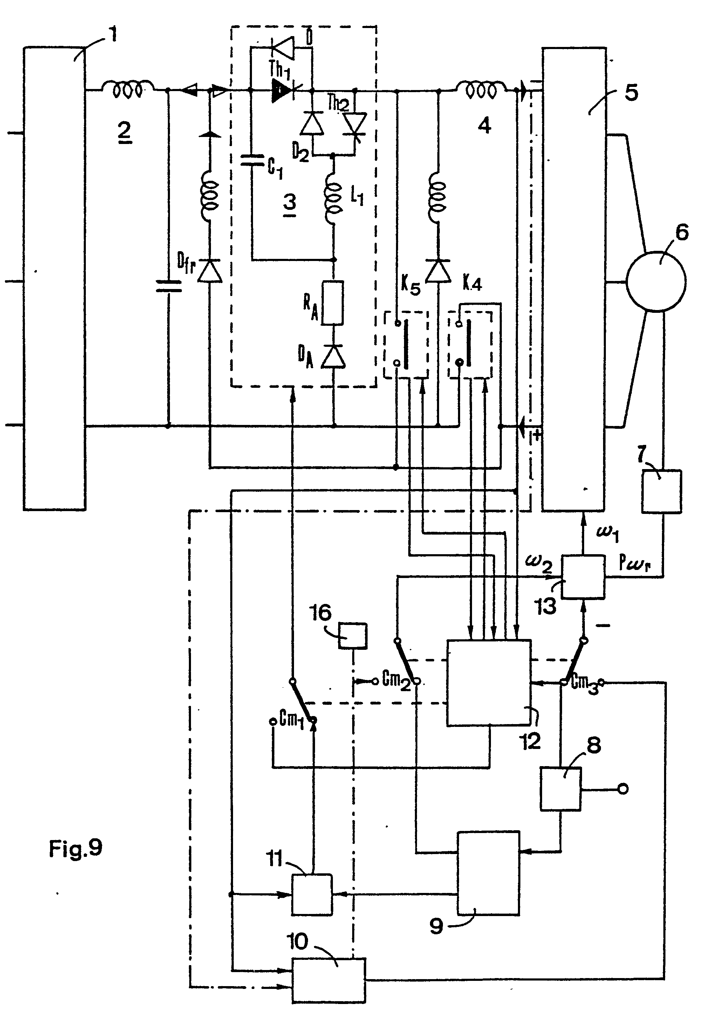

Dès la demande de freinage (voir la figure 7), il y a inversion du couple de commande à partir de l'élément conformateur 8 et la séquence débute par le blocage du hacheur 3 et la mise en service simultanée par l'élément séquenceur 12 du pilotage par variation de la polarité aux bornes de l'onduleur 5 pour maintenir le courant à travers la diode de roue libre $DR_1$ dans des limites imposées par l'élément régulateur de courant 10 utilisé en régime transitoire. L'opération se poursuit par la fermeture du contacteur $K_5$ pour des courants de faible valeur puisque le courant moyen de transition est comparable au courant magnétisant de la machine. A partir de ce moment le courant se répartit suivant deux branches parallèles, comprenant l'une le contacteur $K_5$ en position fermée, l'autre la diode de roue libre $DR_1$. L'ouverture du contacteur K4 se fait donc sans formation d'arc (voir la figure 8). La phase suivante (voir figure 9) consiste à réallumer le thyristor principal $Th_1$ sans mettre en service le circuit d'extinction puis à ouvrir le contacteur $K_5$.

Lorsque le contacteur $K_5$ est ouvert, on arrête le pilotage par changement de la polarité aux bornes de l'onduleur 5 en ramenant les contacteurs $Cm_1$, $Cm_2$ et $Cm_3$ en position correspondant au régime normal et on poursuit le freinage par récupération en maintenant aux bornes de l'onduleur 5 la polarité adéquate, représentée en figure 9, pour faire travailler la machine asynchrone 6 en génératrice.

Pour repasser du freinage à la traction, l'opérateur commande la manœuvre par l'élément conformateur 8. Après avoir vérifié l'annulation du courant dans la machine asynchrone, l'élément séquenceur 12 commande la fermeture du contacteur $K_4$ puis autorise un nouveau démarrage.

Ce même dispositif de pilotage par variation de la polarité aux bornes de l'onduleur peut également s'appliquer en cas de décrochage dans les redresseurs à thyristors fonctionnant en récupération. Les causes de décrochage sont multiples; elles peuvent être dues à une surintensité importante, à un mauvais allumage d'un thyristor ou encore à une chute de la tension primaire alternative.

Sans précaution spéciale, le décrochage dégénère rapidement en un claquage de fusibles du pont. Cet incident est particulièrement lourd de conséquences pour le matériel ferroviaire qui, dans ce cas, doit être remorqué en atelier de réparation.

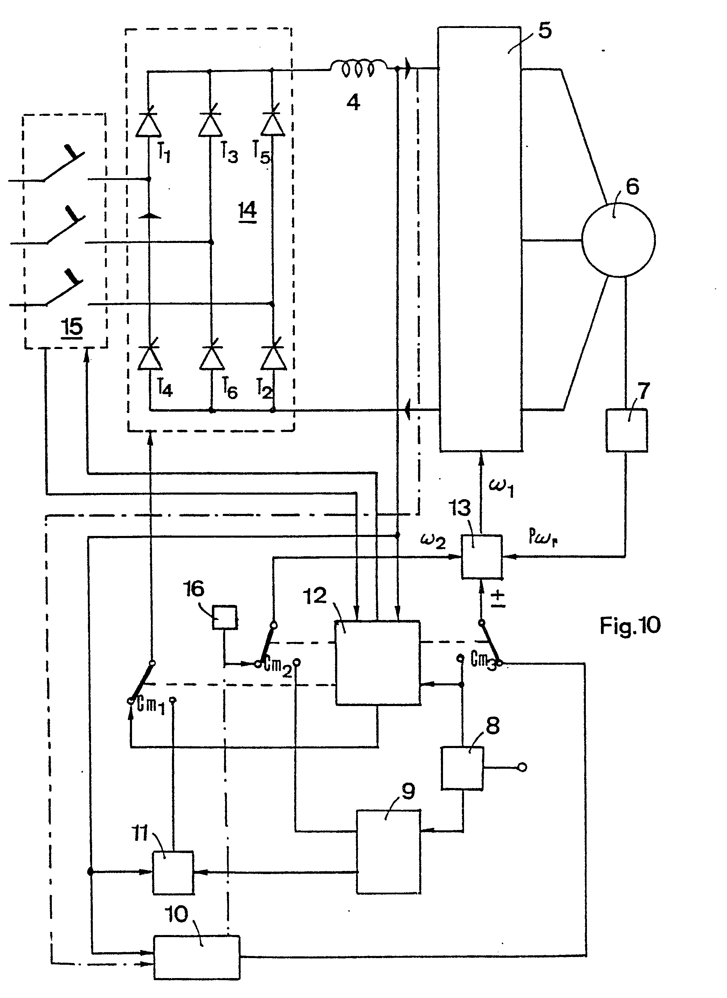

La figure 10 représente un redresseur à thyristors 14 constitué de six thyristors et raccordé d'une part à un réseau primaire triphasé et d'autre part, via une self de lissage 4, à un onduleur 5 alimentant à fréquence variable une machine asynchrone 6. Si par exemple, une baisse de tension apparaît à la source primaire triphasée, lors d'un fonctionnement en récupération, le pilotage des thyristors de redresseur 14 devient défectueux puisque le temps de commutation est inversement proportionnel à la tension de la source.

Dans le cas de la figure 10, supposons que cette baisse de tension survienne alors que le thyristor $T_1$ est allumé. Son temps de commutation étant plus long, $T_1$ ne sera pas éteint pendant la conduction de $T_3$ et le courant parcourant $T_1$ aura alors tendance à s'accroître en réduisant davantage ses possibilités d'extinction. Le thyristor $T_1$ sera encore allumé lorsqu'à son tour s'allumera l'autre thyristor $T_4$ de la même branche. L'allumage simultané de $T_1$ et $T_4$ donne lieu à un court-circuit qui ne pourra s'interrompre que par l'intervention des fusibles de protection.

Les inconvénients précités sont évités par le dispositif de pilotage par changement des polarités aux bornes de l'onduleur qui, par son intervention, empêche non seulement la destruction des thyristors mais également celle des fusibles de protection. Son utilisation supprime donc toute rupture d'exploitation du redresseur à thyristors.

Dès qu'un décrochage de la source primaire triphasée est détecté, le dispositif commande simultanément l'ouverture du disjoncteur 15 et le pilotage par variation de la polarité aux bornes de l'onduleur 5.

Lorsque le court-circuit affecte la branche contenant les thyristors $T_1$ et $T_4$ lors d'un fonctionnement en récupération, l'élément séquenceur 12, selon le courant circulant dans la self de lissage 4, commande l'ouverture du disjoncteur 15. Simultanément l'élément séquenceur 12 branche les commutateurs $Cm_1$, $Cm_2$ et $Cm_3$ en position de phase transitoire pour permettre le pilotage par variation des polarités aux bornes de l'onduleur 5 et ainsi maintenir la valeur du courant circulant dans la self de lissage 4 dans des limites imposées par l'élément régulateur de courant 10 utilisé en régime transitoire.

D'autre part, l'utilisation de ce dispositif de pilotage pour du matériel de traction permet, lorsque se présente un décrochage en freinage par récupération, de maintenir un flux suffisant dans l'attente d'une prochaine accélération ou décélération.

Le dispositif de pilotage par variation de la polarité aux bornes de l'onduleur peut encore s'appliquer lorsqu'un convoi en marche n'est plus alimenté en énergie électrique suite à une panne ou à un accident de la source principale ou encore lorsque, à la suite d'un accident, il faut isoler rapidement le circuit électronique de puissance de sa source principale. Il peut également permettre au conducteur de couper l'alimentation et de laisser le convoi poursuivre sur sa lancée tout en se ménageant la possibilité, à tout instant, de freiner ou de réaccélérer selon les nécessités du trafic.

En effet, ce dispositif de pilotage permet d'utiliser l'énergie disponible dans les masses en rotation pour maintenir dans la machine asynchrone, momentanément sans alimentation, un flux de niveau déterminé pour assurer par une séquence appropriée un freinage électrique.

Pour utiliser de la sorte les masses en rotation, les dispositifs de commande agissant sur l'élément séquenceur 12 sont différents selon l'urgence de l'intervention.

Pour la commande volontaire le poste de pilotage est muni d'une commande supplémentaire qui, en agissant sur l'élément séquenceur 12, maintient le dispositif de pilotage au dernier stade du processus transitoire. Le schéma électronique de puissance comprenant un redresseur à thyristors 14 est modifié par le montage en parallèle sur le redresseur 14 d'un thyristor de roue libre.

Au contraire, si l'intervention doit être rapide, suite par exemple à un court-circuit sur la caténaire ou à la disparition soudaine de celle-ci, la commande de l'élément séquenceur 12 est faite au départ d'une mesure de la tension sur le condensateur du filtre d'entrée ou du courant dans la self de lissage 4. De plus, le circuit électronique de puissance doit être quelque peu modifié.

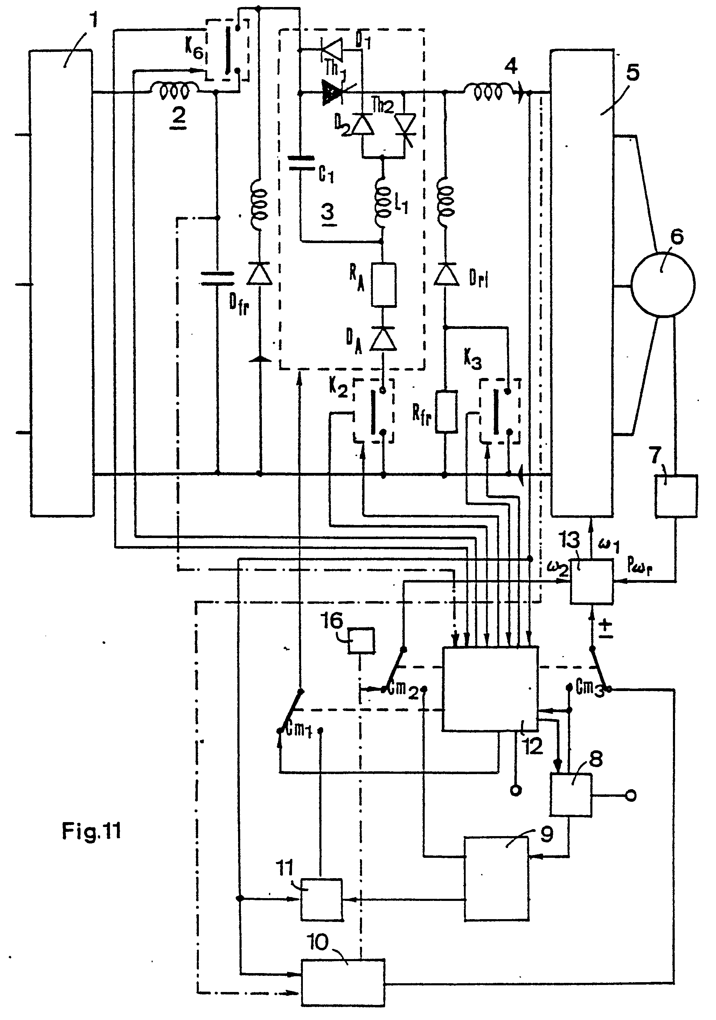

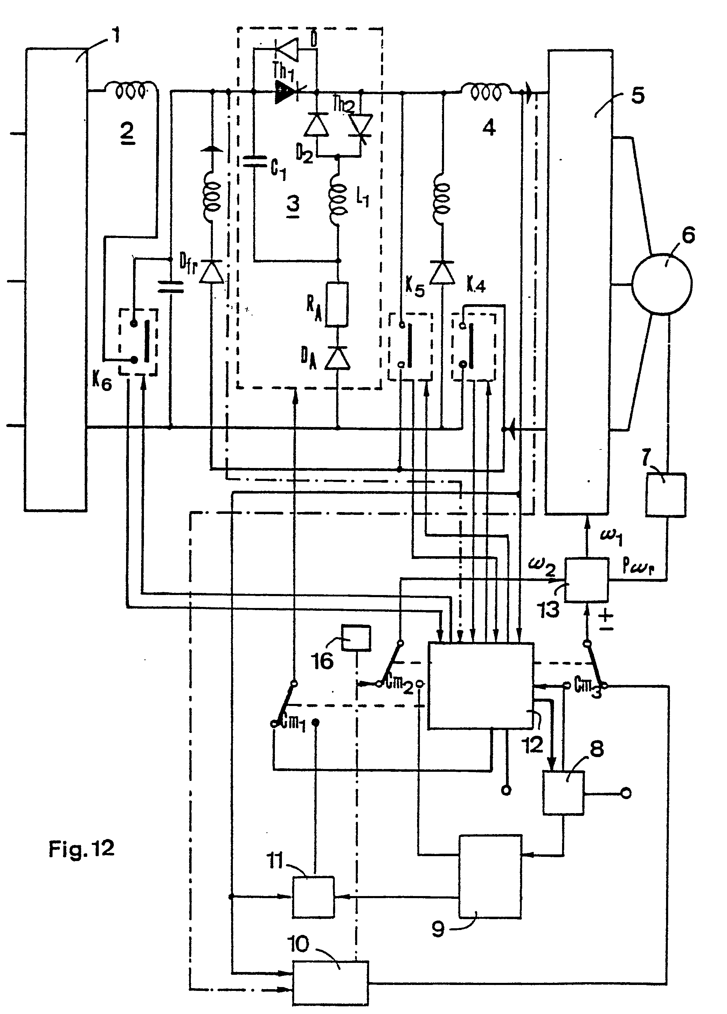

Dans le cas du freinage rhéostatique, le contacteur $K_1$ est remplacé par un disjoncteur ultra-rapide $K_6$ (voir la figure 11). Dans le cas du freinage par récupération un disjoncteur ultra rapide $K_6$ doit être monté à l'amont du condensateur du filtre 2 pour isoler le circuit de la source de tension (voir figure 12).

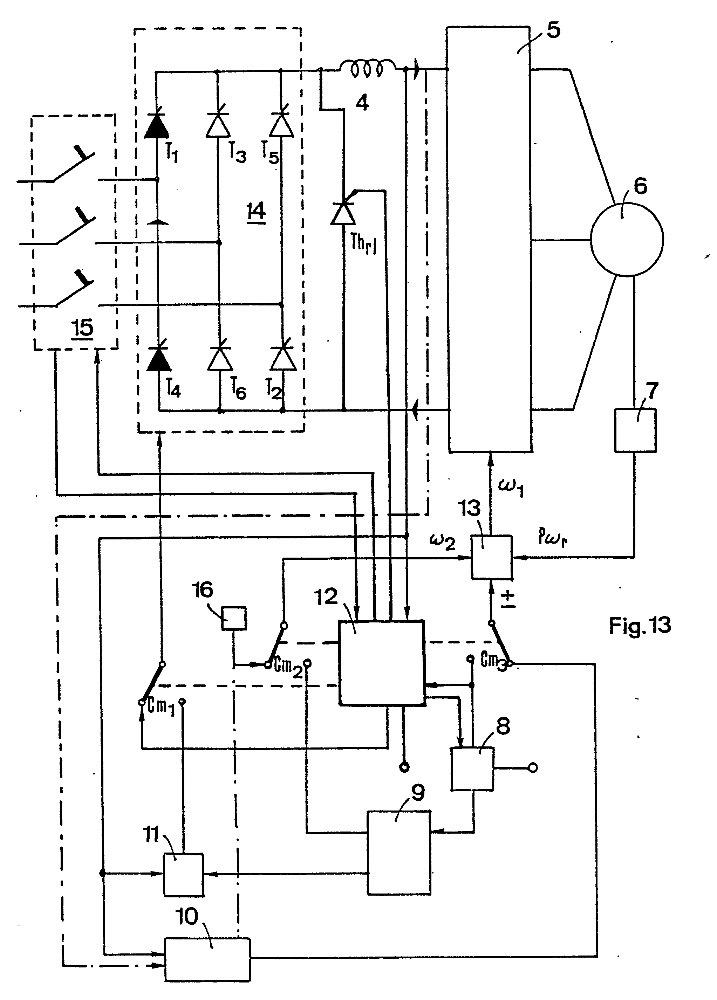

Les figures 11 et 12 montrent les schémas respectivement utilisés pour le freinage rhéostatique et le freinage par récupération dans le cas d'un circuit de puissance comprenant un redresseur à diodes 1. La figure 13 représente un circuit de puissance comprenant un redresseur à thyristors 14.

La figure 11 représente un schéma correspondant à l'état de transition prolongé pour un circuit électronique de puissance adapté au freinage rhéostatique.

Lorsque le conducteur choisit le fonctionnement sans alimentation, il manœuvre un levier de commande qui agit directement sur l'élément séquenceur 12. Suite à cette manœuvre, l'élément séquenceur 12 bascule les commutateurs $Cm_1$, $Cm_2$ et $Cm_3$ en position de régime transitoire et commande l'allumage du thyristor d'extinction $Th_2$ pour bloquer le hacheur 3 en éteignant le thyristor $Th_1$.

L'élément séquenceur 12 commande ensuite l'ouverture du disjoncteur ultra-rapide $K_6$ pour isoler le circuit électronique de puissance de son alimentation en énergie électrique.

L'élément séquenceur 12 réallume ensuite le thyristor principal $Th_1$ du hacheur 3, circuit d'extinction inhibé puis commande l'ouverture des contacteurs $K_2$ et $K_3$.

Pendant ce temps, la valeur modulaire de la pulsation rotorique $\omega_2$ est, dans le cas le plus simple, fournie, par l'élément à consigne constante 16, à l'élément synthétiseur 13 qui reçoit, d'autre part, la valeur $P\omega_r$ relevée par l'élément capteur de vitesse 7.

Simultanément selon la valeur du courant circulant dans la self de lissage 4, l'élément régulateur de courant 10 fournit le signe affectant la pulsation rotorique $\omega_2$ à l'élément synthétiseur 13 pour permettre à celui-ci d'imposer, aux bornes de l'onduleur 5, les polarités adéquates selon la valeur de la pulsation statorique $\omega_1$ et d'ainsi faire fonctionner la machine asynchrone 6 alternativement en moteur ou en générateur.

Cet état de transition peut se prolonger aussi longtemps que le convoi est capable de convertir l'énergie des masses en rotation en énergie électrique. Pendant cette période transitoire prolongée, reprise en figure 11, l'opérateur se ménage la possibilité de freiner ou de réaccélérer selon les besoins du moment.

Pour assurer le freinage, il suffit d'imposer un couple négatif à l'élément conformateur 8 qui transmet l'information à l'élément séquenceur 12. Celui-ci commande le basculement des commutateurs $Cm_1$, $Cm_2$ et $Cm_3$ dans leur position de fonctionnement normal. Dès ce moment, on retrouve la configuration, indiquée précédemment en figure 4, correspondant au freinage rhéostatique.

Pour obtenir une accélération, l'opérateur impose un couple positif à l'élément conformateur 8 qui transmet à son tour l'information vers l'élément séquenceur 12. Ce dernier commande d'abord le basculement du commutateur $Cm_3$ et impose à l'élément synthétiseur 13 un signe positif affectant la valeur modulaire de la pulsation roto-

rique $\omega_2$. De la sorte l'élément synthétiseur 13 impose une valeur de la pulsation statorique $\omega_1$ à l'onduleur 5 correspondant à la polarité adéquate (polarité positive sur l'entrée de l'onduleur en série avec la self de lissage 4) pour faire fonctionner la machine asynchrone 6 en moteur. Le maintien de cette polarité aux bornes de l'onduleur 5 entraîne une réduction progressive du courant circulant dans la self de lissage 4 jusqu'à son annulation. Lorsque l'élément séquenceur 12 est informé de l'annulation du courant dans la self de lissage 4, il commande le basculement des contacteurs $Cm_1$ et $Cm_2$ en position de régime normal, puis la fermeture des contacteurs $K_6$, $K_2$ et $K_3$. De la sorte, on retrouve la configuration indiquée précédemment en figure 1, correspondant à la traction. Une autre manière de procéder serait, afin d'éviter l'annulation du courant dans la self de lissage 4, d'imposer via l'élément 12, compte tenu des informations qu'il reçoit, la fermeture des contacteurs de puissance $K_2$ et $K_3$, ensuite le blocage de $Th_1$ et la fermeture de $K_6$, enfin le basculement des commutateurs $Cm_1$, $Cm_2$ et $Cm_3$ en position de régime normal correspondant à la traction. On évite ainsi de devoir procéder à une nouvelle séquence de démarrage puisqu'à aucun moment le courant n'a été interrompu dans l'onduleur 5 et dans la machine 6.

Par contre, si un accident oblige à déconnecter brusquement le circuit électronique de puissance de sa source d'alimentation, comme par exemple suite à un court-circuit sur la caténaire ou à la disparition soudaine de celle-ci, l'élément séquenceur 12, informé par la mesure du courant circulant dans la self de lissage 4 et/ou la mesure de la tension aux bornes du condensateur du filtre d'entrée 2, commande immédiatement l'ouverture du disjoncteur ultra-rapide $K_6$ et le basculement des commutateurs $Cm_1$, $Cm_2$ et $Cm_3$ en position de régime transitoire. L'élément séquenceur 12 vérifie ensuite l'allumage du thyristor principal $Th_1$ du hacheur 3, circuit d'extinction inhibé, puis ouvre les contacteurs $K_2$ et $K_3$. Simultanément, et de la même manière que la manœuvre volontaire ci-dessus décrite, le dispositif de pilotage impose les polarités adéquates aux bornes de l'onduleur 5 pour maintenir le flux dans la machine asynchrone 6 à une valeur déterminée. Cet état de transition prolongé permet notamment de commander en cas de besoin le freinage du convoi avec une efficacité suffisante.

La figure 12 représente un schéma correspondant à l'état de transition prolongé pour un circuit électrique de puissance adapté au freinage par récupération.

Pour exécuter la manœuvre coupant volontairement l'alimentation du circuit électronique de puissance, le conducteur du convoi en marche dispose d'un levier de commande agissant directement sur l'élément séquenceur 12. Lorsque l'opérateur manœuvre ce levier de commande, l'élément séquenceur 12 bascule les commutateurs $Cm_1$, $Cm_2$ et $Cm_3$ et bloque le hacheur 3 en éteignant le thyristor principal $Th_1$. Ensuite l'ouverture du contacteur $K_4$. Après avoir commandé

le réallumage du thyristor principal $Th_1$ du hacheur 3, circuit d'extinction inhibé, l'élément séquenceur 12 commande finalement l'ouverture du contacteur $K_5$.

Pendant ce temps, la valeur modulaire de la pulsation rotorique $\omega_2$ est, dans le cas le plus simple, fournie par l'élément à consigne constante 16 à l'élément synthétiseur 13 qui reçoit, d'autre part, la valeur $P\omega_r$ relevée par l'élément capteur de vitesse 7. Simultanément, l'élément régulateur de courant 10 fournit, selon la valeur du courant circulant dans la self de lissage 4, le signe, affectant la pulsation rotorique $\omega_2$, à l'élément synthétiseur 13. De la sorte, après avoir reçu ces diverses informations, l'élément synthétiseur 13 impose, par la valeur de la pulsation statorique $\omega_1$, les polarités aux bornes de l'onduleur 5 pour faire fonctionner la machine asynchrone 6 alternativement en moteur ou en générateur et ainsi maintenir un flux déterminé dans la machine.

Cet état de transition peut se prolonger aussi longtemps que le convoi roule et donne à l'opérateur la possibilité de freiner ou de réaccélérer à volonté.

Le freinage est obtenu en imposant un couple négatif à l'élément conformateur 8 qui transmet l'information à l'élément séquenceur 12. Ce dernier bascule les commutateurs $Cm_1$, $Cm_2$ et $Cm_3$ dans la position de fonctionnement normal. Dès ce moment, on retrouve la configuration indiquée précédemment à la figure 9 et correspondant au freinage par récupération.

Pour obtenir une accélération, l'opérateur impose un couple positif à l'élément conformateur 8 qui transmet l'information à l'élément séquenceur 12. Ce dernier commande d'abord le basculement du commutateur $Cm_3$ et impose à l'élément synthétiseur 13 un signe positif affectant la valeur modulaire de la pulsation rotorique $\omega_2$. De la sorte l'élément synthétiseur 13 impose une valeur de la pulsation statorique $\omega_1$ à l'onduleur 5 correspondant à la polarité adéquate (polarité positive sur l'entrée de l'onduleur en série avec la self de lissage 4) pour faire fonctionner la machine asynchrone 6 en moteur. Le maintien de cette polarité aux bornes de l'onduleur 5 entraîne une réduction progressive du courant circulant dans la self de lissage 4 jusqu'à son annulation. Lorsque l'élément séquenceur 12 est informé de l'annulation du courant dans la self de lissage 4, il commande le basculement des contacteurs $Cm_1$ et $Cm_2$ en position de régime normal, puis la fermeture des contacteurs $K_4$. On retrouve alors la configuration indiquée précédemment à la figure 6 et correspondant à la traction.

Une autre manière de procéder serait, afin d'éviter l'annulation du courant dans la self de lissage 4, d'imposer via l'élément 12 la fermeture du contacteur de puissance $K_5$, suivi du blocage de $Th_1$, ensuite la fermeture de $K_4$ et enfin l'ouverture de $K_5$ suivie du basculement des commutateurs $Cm_1$, $Cm_2$ et $Cm_3$ en position de régime de devoir procéder et une nouvelle séquence de démarrage puisque le courant n'est interrompu ni dans l'onduleur 5, ni dans la machine 6.

Par contre, si un accident oblige à déconnecter brusquement le circuit électronique de puissance de son alimentation, par exemple suite à un court-circuit sur la caténaire, les opérations se déroulent comme suit. L'élément séquenceur 12, informé de l'accident par la mesure du courant circulant dans la self de lissage 4 et/ou la mesure du courant circulant dans la self de lissage 4 et/ou la mesure de la tension aux bornes du condensateur du filtre 2, commande immédiatement l'ouverture du disjoncteur ultra-rapide $K_6$ et le basculement des commutateurs $Cm_1$, $Cm_2$, $Cm_3$ en position de régime transitoire. L'élément séquenceur 12 vérifie ensuite l'allumage du thyristor principal $Th_1$ du hacheur 3 puis ouvre le contacteur $K_4$. Simultanément, et de la manière précédemment décrite, le dispositif de pilotage impose les polarités adéquates aux bornes de l'onduleur 5 pour maintenir le flux dans la machine asynchrone 6, à une valeur déterminée pendant toute la durée de cet état de transition prolongé. De la sorte, on peut, à tout instant freiner le convoi avec une efficacité suffisante.

Il est à remarquer que le même état de transition prolongé peut s'appliquer à un circuit électronique de puissance adapté au freinage mixte.

La figure 13 représente un schéma correspondant à l'état de transition prolongé pour un circuit électronique de puissance comprenant un redresseur à thyristors 14. Les processus amenant à cet état de transition prolongé diffèrent selon la manœuvre volontaire ou l'intervention d'urgence.

Dans le cas d'une manœuvre volontaire libérant le circuit électronique de puissance de la source primaire polyphasée, le processus démarre en actionnant le levier de commande de l'élément séquenceur 12 qui répercute l'ordre en inhibant la commande des thyristors $T_1$, $T_2$, $T_3$, $T_4$, $T_5$, $T_6$ du redresseur 14. L'élément séquenceur 12 commande ensuite le basculement des commutateurs $Cm_1$, $Cm_2$, $Cm_3$ et l'allumage du thyristor de roue libre $Th_{r_1}$.

Dans le cas d'une intervention d'urgence, suite par exemple à un court-circuit sur la caténaire, l'élément séquenceur 12 réagit selon la mesure du courant circulant dans la self de lissage 4 pour d'abord commander l'ouverture du disjoncteur 15, puis le basculement des commutateurs $Cm_1$, $Cm_2$, $Cm_3$ et l'allumage de deux thyristors d'une même branche du redresseur 14, par exemple les thyristors $T_1$ et $T_4$ comme repris à la figure 13.

Simultanément, et de la même manière pour les deux cas précités (manœuvre ou urgence), l'élément séquenceur 13 reçoit respectivement: la valeur modulaire de la pulsation rotorique $\omega_2$ fournie, dans le cas le plus simple, par l'élément à consigne constante 16, le signe affectant $\omega_2$ fourni par l'élément régulateur 10 selon la valeur du courant circulant dans la self de lissage 4, la valeur $P\omega_r$ relevée par l'élément capteur de vitesse 7, pour imposer à l'onduleur 5 la valeur de la pulsation statorique $\omega_1$ et ainsi faire fonctionner la machine asynchrone 6 alternativement en moteur ou en générateur de façon à maintenir un flux déterminé dans la machine.

L'état de transition prolongé permet d'accéder immédiatement au freinage ou à la traction par simple commande effectuée au poste de pilotage.

Dans le cas, où l'état de transition prolongé a été obtenu par une manœuvre volontaire, une réaccélération est obtenue en demandant un couple positif à l'élément conformateur 8.

L'élément conformateur 8 associé à l'élément séquenceur 12, informés de l'état du circuit de puissance, commandent le basculement du commutateur $Cm_3$ et imposent à l'élément synthétiseur 13 un signe positif affectant la valeur modulaire de la pulsation rotorique $\omega_2$. De la sorte l'élément synthétiseur 13 impose une valeur de la pulsation statorique $\omega_1$ à l'onduleur 5 correspondant à la polarité adéquate (polarité positive sur l'entrée de l'onduleur en série avec la self de lissage 4) pour faire fonctionner la machine asynchrone 6 en moteur. Le maintien de cette polarité aux bornes de l'onduleur 5 entraîne une réduction progressive du courant circulant dans la self de lissage 4 jusqu'à son annulation. Lorsque l'élément séquenceur 12 est informé de l'annulation du courant dans la self de lissage 4, il commande le basculement des contacteurs $Cm_1$ et $Cm_2$ pour donner au schéma la configuration correspondant au régime normal permettant d'établir une séquence de traction.

Au départ de l'état de transition prolongé, le freinage est obtenu en demandant un couple négatif à l'élément conformateur 8.

Le processus ainsi engagé se déroule alors de la même façon que celui décrit pour la traction. En effet, il faut d'abord annuler le courant pour éteindre le thyristor de roue libre $Th_{r_1}$ puis retrouver un certain flux dans la machine par une courte séquence de traction. Dès l'instant où la valeur du flux dans la machine est suffisante l'élément conformateur 8 associé à l'élément séquenceur 12 imposent à l'élément synthétiseur 13 un signe négatif affectant la valeur modulaire de la pulsation rotorique $\omega_2$. Il en résulte une pulsation statorique $\omega_1$, émise par l'élément synthétiseur 13 pour imposer aux bornes de l'onduleur 5 les polarités correspondant au fonctionnement générateur de la machine asynchrone 6.

Lorsque l'état de transition prolongé a été obtenu par une intervention automatique d'urgence basée sur la mesure du courant circulant dans la self de lissage 4, une réaccélération est obtenue, pour autant que l'anomalie constatée sur le réseau ait disparu, en demandant un couple positif à l'élément conformateur 8.

L'élément conformateur 8 associé à l'élément séquenceur 12 basculent le commutateur $Cm_3$ et imposent à l'élément synthétiseur 13 un signe positif à $\omega_2$. En conséquence, la pulsation statorique $\omega_1$, émise par l'élément synthétiseur 13, impose les polarités aux bornes de l'onduleur 5 correspondant au fonctionnement moteur de la machine asynchrone 6. De la sorte, le courant circulant dans le circuit électronique de puissance s'annule et les thyristors $T_1$ et $T_4$ du redresseur 14 s'éteignent. Dès ce moment l'élément séquenceur 12 commande la fermeture du disjoncteur 15 puis bascule les commutateurs $Cm_1$ et $Cm_2$ pour donner au schéma sa configuration de régime normal et permettre d'opérer une séquence de traction.

Au contraire si un freinage est demandé à la suite d'un état de transition prolongé obtenu par une intervention automatique d'urgence, et pour autant que l'anomalie constatée sur le réseau ait disparu, l'opérateur demande un couple négatif par l'intermédiaire de l'élément conformateur 8.

La suite du processus se déroule comme précédemment pour amener la machine asynchrone 6 à retrouver un flux suffisant par une courte séquence de traction. L'élément conformateur 8 associé à l'élément séquenceur 12 imposent alors à l'élément synthétiseur 13 un signe négatif à $\omega_2$. A son tour l'élément synthétiseur 13, par la valeur de la pulsation statorique $\alpha_1$, impose aux bornes de l'onduleur 5 les polarités correspondant au fonctionnement générateur de la machine synchrone.

## Revendications

1. Dispositif de pilotage par variation de la polarité aux bornes d'un onduleur (5) alimentant une machine asynchrone (6) et alimenté à travers un circuit électronique de puissance et une self de lissage (4) par une source de tension continue réglable utilisant un convertisseur éventuellement associé à un hacheur (14; 1, 2, 3), un dispositif de pilotage comportant un premier circuit (7, 8, 9, 11, 12, 13) dit de régime normal intervenant en traction ou en freinage et un agencement de commutateurs ($K_1$–$K_6$, $Cm_1$–$Cm_3$) commandés soit par l'inversion de la consigne de couple (8, 12) définissant la configuration du circuit de puissance en traction ou en freinage, soit par une manœuvre volontaire (8, 12) libérant le circuit électronique de puissance de la source primaire, la configuration du circuit de puissance incluant des éléments de commutation pour court-circuiter les bornes de l'onduleur à travers la self de lissage (4), et la fonction en traction ou en freinage étant déterminée par des consignes positives ou négatives de pulsation rotorique qui déterminent, par l'intermédiaire d'un élément synthétiseur (13) avec un signal de vitesse, la pulsation statorique, caractérisé en ce qu'il comporte un second circuit (7, 8, 10, 12, 13, 16) dit de fonctionnement transitoire intervenant lors du passage du fonctionnement moteur au fonctionnement générateur de la machine asynchrone (6) pour préparer un freinage rhéostatique, par récupération ou mixte, lors d'un défaut de la source primaire, lors d'une absence totale d'alimentation ou lors du passage du fonctionnement générateur au fonctionnement moteur de la machine asynchrone (6), en ce que l'intervention du circuit de fonctionnement transitoire (7, 8, 10, 12, 13, 16) maintient le courant dans le court-circuit de la self de lissage (4) avec l'onduleur (5) en faisant varier continuellement les polarités aux bornes de l'onduleur (5) par alternances périodiques du signe affectant la valeur modulaire de la pulsation rotorique selon un signal de comparaison du courant circulant dans la self de lissage et d'une valeur de consigne, et en ce que l'agencement des commutateurs ($K_1$–$K_6$, $Cm_1$–$Cm_3$) répond à des séquences de basculement spécifiques à chacune des dites opérations suivant un pilotage imposé par le circuit de fonctionnement transitoire.

2. Dispositif de pilotage selon la revendication 1, caractérisé en ce que le redresseur (14; 1, 2 et 3) est associé à des éléments de commutation (15; $Th_1$, $K_1$, $K_2$, $K_3$, $K_4$, $K_5$, $K_6$) définissant la configuration du circuit de puissance et commandés par un élément séquenceur (12), en ce que cet élément séquenceur (12) commande d'autres éléments de commutation ($Cm_1$, $Cm_2$, $Cm_3$) sélectionnant des consignes prélevées à la sortie d'éléments régulateurs de courant (10, 11) et d'éléments générateurs de consigne (8, 9, 12, 16), en ce qu'une partie des éléments de commutation ($Cm_1$) fournit des consignes déterminant la séquence de commande du redresseur (14; 1, 2 et 3) et en ce qu'une autre partie des éléments de commutation ($Cm_2$, $Cm_3$) fournit des consignes déterminant, par l'intermédiaire d'un élément synthétiseur (13), la valeur de la pulsation statorique ($\omega_1$), qui en imposant la polarité aux bornes de l'onduleur (5) détermine la valeur et la direction du couple de la machine asynchrone (6).

3. Dispositif de pilotage selon une des revendications précédentes caractérisé en ce que l'élément synthétiseur (13) reçoit la valeur modulaire de la pulsation rotorique ($\omega_2$) soit par l'intermédiaire d'un élément calculateur du point de fonctionnement (9) en régime normal; soit par l'intermédiaire d'un élément de consigne (16) pour une valeur constante de la pulsation rotorique ($\omega_2$) en régime transitoire, soit par l'intermédiaire de l'élément régulateur de courant (10) pour une valeur variable de la pulsation rotorique ($\omega_2$) en régime transitoire.

4. Dispositif de pilotage selon une des revendications précédentes caractérisé en ce que l'élément synthétiseur (13) reçoit le signe affectant la valeur modulaire de la pulsation rotorique ($\omega_2$) soit par l'intermédiaire d'un élément conformateur (8) en régime normal, soit par l'intermédiaire de l'élément régulateur de courant (10) en régime transitoire, après comparaison du courant circulant dans la self de lissage (4) et des valeurs de références consignées en l'élément régulateur de courant (10) soit par l'élément conformateur (8) associé à l'élément séquenceur (12) pour mettre fin, dans certains cas, au régime transitoire prolongé.

5. Dispositif de pilotage selon une des revendications précédentes caractérisé en ce que l'allumage des thyristors ($T_1$, $T_2$, $T_3$, $T_4$, $T_5$, $T_6$ ou $Th_1$, $Th_2$) du convertisseur (14 ou 3) est commandé soit par le régulateur de courant (11) en régime normal, après comparaison de la valeur du courant circulant dans la self de lissage (4) et la valeur modulaire du courant imposée par un élément calculateur du point de fonctionnement (9) soit par l'élément séquenceur (12) en régime transitoire, selon la valeur du courant circulant dans la self de lissage (4) ou du niveau de tension du condensateur du filtre d'entrée (2) et l'état des éléments de commutation (15; $K_1$, $K_2$, $K_3$; $K_4$, $K_5$, $K_6$).

6. Dispositif de pilotage selon une des revendications précédentes caractérisé en ce que les commutateurs ($Cm_1$, $Cm_2$, $Cm_3$) commandés par l'élément séquenceur (12) passent de la position de régime normal à la position de régime transitoire lorsque l'élément conformateur (8) enregistre une inversion du couple demandé, et passent de la position de régime transitoire à la position de régime normal lorsque l'élément séquenceur (12) est informé de la position correcte des éléments de commutation (15; $K_1$, $K_2$, $K_3$; $K_4$, $K_5$, $K_6$).

7. Dispositif de pilotage selon une des revendications précédentes cractérisé en ce que les commutateurs ($Cm_1$, $Cm_2$ et $Cm_3$) commandés par l'élément séquenceur (12) passent de la position de régime normal à la position de régime transitoire prolongé lorsque l'élément séquenceur (12) enregistre une manœuvre libérant le circuit de puissance de la source primaire, et passent de la position de régime transitoire prolongé à la position de régime normal lorsque l'élément séquenceur (12) est informé d'une part par l'élément conformateur (8) de la demande d'un couple positif ou négatif et d'autre part de la position correcte des éléments de commutation (15; $K_1$, $K_2$, $K_3$, $K_4$, $K_5$, $K_6$).

8. Dispositif de pilotage selon une des revendications précédentes caractérisé en ce que les commutateurs ($Cm_1$, $Cm_2$, $Cm_3$) commandé par l'élément séquenceur (12) passent de la position de régime normal à la position de régime transitoire prolongé lorsque l'élément séquenceur (12) enregistre par l'intermédiaire de capteurs appropriés une valeur anormale du courant circulant dans la self de lissage (4) et/ou de la tension aux bornes du condensateur du filtre d'entrée (2) et passent de la position de régime transitoire prolongé à la position de régime normale lorsque l'élément séquenceur (12) est informé d'une part par l'élément conformateur (8) de la demande d'un couple positif ou négatif d'autre part de la position correcte des éléments de commutation (15; $K_1$, $K_2$, $K_3$, $K_4$, $K_5$, $K_6$), pour autant que des capteurs appropriés signalent à l'élément séquenceur (12) que le défaut a disparu.

**Claims**

1. Control device by polarity change at the terminals of an inverter (5) feeding an asynchronous machine (6) and supplied through an electronic power circuit and a smoothing choke (4) by a regulatable D.C. voltage source using a converter possibly associated with a chopper (14; 1, 2, 3), a control device comprising a first circuit (7, 8, 9, 11, 12, 13) called the normal regime circuit coming into action for traction or braking, and an arrangement of switches ($K_1$–$K_6$, $Cm_1$–$Cm_3$) which are controlled either by inversion of the torque reference variable (8, 12) defining the configuration of the power circuit in traction or braking, or by an arbitrary action (8, 12) freeing the electronic power circuit from the primary source, the configuration of the power circuit including switching elements for short-circuiting the terminals of the inverter through the smoothing choke (4), and the traction or braking function being determined by positive or negative reference variables of rotor pulsation which determine the stator pulsation by means of a synthesiser element (13) with a speed signal, characterised in that it comprises a second circuit (7, 8, 10, 12, 13, 16) called the transitional operation circuit, coming into action when the asynchronous machine (6) changes from motor operation to generator operation for preparing a rheostatic braking, by regeneration or of mixed type, in the event of a defect in the primary source, in the event of total absence of supply, or in the event of changing from generator operation to motor operation at the asynchronous machine (6), in that the action of the transitional operation circuit (7, 8, 10, 12, 13, 16) maintains the current in the short-circuit of the smoothing choke (4) with the inverter (5), continually varying the polarities at the terminals of the inverter (5) by periodic alternations of the sign concerning the modular value of the rotor pulsation in accordance with a comparison signal from the current flowing in the smoothing choke and a reference variable value, and in that the arrangement of switches ($K_1$–$K_6$, $Cm_1$–$Cm_3$) corresponds to tripping sequences specific to each of the said operations in accordance with control imposed by the transitional operation circuit.

2. Control device according to claim 1, characterised in that the rectifier (14; 1, 2 and 3) is associated with switching elements (15; $Th_1$, $K_1$, $K_2$, $K_3$, $K_4$, $K_5$, $K_6$) defining the configuration of the power circuit and controlled by a sequencer element (12), in that this sequencer element (12) controls other switching elements ($Cm_1$, $Cm_2$, $Cm_3$) selecting reference variables taken from the output of current regulating elements (10, 11) and reference variable generating elements (8, 9, 12, 16), in that some of the switching elements ($Cm_1$) furnish reference variables determining the switching sequence of the rectifier (14; 1, 2 and 3) and in that another portion of the switching elements ($Cm_2$, $Cm_3$) furnishes reference variables determining, through the agency of a synthesiser element (13), the value of the stator pulsation ($\omega_1$), which in imposing the polarity at the terminals of the inverter (5) determines the value and the direction of the torque of the asynchronous machine (6).

3. Control device according to one of the preceding claims, characterised in that the synthesiser element (13) receives the modular value of the rotor pulsation ($\omega_2$) either through the agency of an element for calculating the operating point (9) in the normal regime, or through the agency of a reference variable element (16) for a constant value of rotor pulsation ($\omega_2$) in the transitional regime, or through the agency of the current regulating element (10) for a variable value of the rotor pulsation ($\omega_2$) in the transitional regime.

4. Control device according to one of the preceding claims, characterised in that the synthesiser element (13) receives the sign concerning the modular value of the rotor pulsation ($\omega_2$) either through the agency of a shaper element (8) in the normal regime, or through the agency of the current regulating element (10) in the transitional regime, after comparison of the current flowing in the smoothing choke (4) and values of references assigned in the current regulating element (10) or by the shaper element (8) associated with the sequencer element (12) for bringing to an end, in certain cases, the prolonged transitional regime.

5. Control device according to one of the preceding claims characterised in that the firing of the thyristors ($T_1$, $T_2$, $T_3$, $T_4$, $T_5$, $T_6$ or $Th_1$, $Th_2$) of the converter (14 or 3) is controlled either by the current regulator (11) in the normal regime, after comparison of the value of the current flowing in the smoothing choke (4) and the modular value of the current imposed by the element calculating the operating point (9) or by the sequencer element (12) in the transitional regime, according to the value of the current flowing in the smoothing choke (4) or of the level of the voltage of the capacitor of the input filter (2) and the state of the switching elements (15; $K_1$, $K_2$, $K_3$; $K_4$, $K_5$, $K_6$).

6. Control device according to one of the preceding claims, characterised in that the switches ($Cm_1$, $Cm_2$, $Cm_3$) controlled by the sequencer element (12) change from the position of the normal regime to the transitional regime position when the shaper element (8) records an inversion of the torque needed, and change from the transitional regime position to the normal regime position when the sequencer element (12) is informed of the correct position of the switching elements (15; $K_1$, $K_2$, $K_3$; $K_4$, $K_5$, $K_6$).

7. Control device according to one of the preceding claims characterised in that the switches ($Cm_1$, $Cm_2$, $Cm_3$) controlled by the sequencer element (12) change from the normal regime position to the prolonged transitional regime position when the sequencer element (12) records an action freeing the power circuit from the primary source, and change from the prolonged transitional regime position to the normal regime position when the sequencer element (12) is informed on the one hand by the shaper element (8) of the need for a positive or negative torque and on the other hand of the correct position of the switching elements (15; $K_1$, $K_2$, $K_3$, $K_4$, $K_5$, $K_6$).

8. Control device according to one of the preceding claims, characterised in that the switches ($Cm_1$, $Cm_2$, $Cm_3$) controlled by the sequencer element (12) change from the normal regime position to the prolonged transitional regime position when the sequencer element (12) records through the agency of appropriate pickups an abnormal value of the current flowing in the smoothing choke (4) and/or of the voltage at the terminals of the capacitor of the input filter (2) and change from the prolonged transitional regime position to the normal regime position when the sequencer element (12) is informed on the one hand by the shaper element (8) of the need for a positive or negative torque and on the other hand of the correct position of the switching elements (15; $K_1$, $K_2$,

$K_3$, $K_4$, $K_5$, $K_6$) insofar as suitable pickups indicate to the sequencer element (12) that the fault has disappeared.

**Patentansprüche**

1. Vorrichtung zur Steuerung durch Umkehrung der Polarität an den Anschlüssen eines eine Asynchronmaschine (6) speisenden Wechselrichters (5), der über eine elektronische Leistungsschaltung und eine Glättungsdrossel (4) von einer einstellbaren Gleichspannungsquelle versorgt wird, bei der ein Umformer, eventuell in Verbindung mit einem Zerhacker (14; 1, 2, 3) verwendet wird, mit einer ersten Schaltung (7, 8, 9, 11, 12, 13) für den normalen Betrieb, die bei Antrieb oder Bremsung wirksam ist, und einer Gruppe von Umschaltern ($K_1$–$K_6$, $Cm_1$–$Cm_6$), die entweder durch Umkehrung des Drehmoment-Sollwertes gesteuert werden (8, 12), der die Konfiguration der Leistungsschaltung bei Antrieb oder Bremsung festlegt, oder durch manuelle Betätigung gesteuert werden (8, 12), bei der die elektronische Leistungsschaltung von der Primärquelle abgetrennt wird, wobei die Konfiguration der Leistungsschaltung Schaltelemente aufweist, um die Anschlüsse des Wechselrichters über die Glättungsdrossel (4) kurzzuschliessen, und wobei die Antriebs- oder Bremsfunktion durch positive oder negative Sollwerte für die Rotorkreisfrequenz bestimmt wird, die in Verbindung mit einem Drehzahlsignal über ein Synthesatorelement (13) die Statorkreisfrequenz bestimmen, dadurch gekennzeichnet, dass sie eine zweite Schaltung (7, 8, 10, 12, 13, 16) für den Übergangsbetrieb aufweist, die beim Übergang von dem Motorbetrieb zu dem Generatorbetrieb der Asynchronmaschine (6) wirksam ist, um eine Widerstandsbremsung, Rückspeisungsbremsung oder gemischte Bremsung vorzubereiten, und die ausserdem bei einer Störung der Primärquelle, bei einem totalen Ausfall der Versorgung, oder bei dem Übergang von dem Generatorbetrieb zu dem Motorbetrieb der Asynchronmaschine (6) wirksam ist, dass infolge der Wirkung der Übergangsbetriebsschaltung (7, 8, 10, 12, 13, 16) der Strom in dem kurzgeschlossenen Kreis mit der Glättungsdrossel (4) und dem Wechselrichter (5) aufrechterhalten wird, wozu durch periodische Umkehrung des Vorzeichens für den modularen Wert der Rotorkreisfrequenz in Abhängigkeit von einem Vergleichssignal des in der Glättungsdrossel fliessenden Stroms und einem Sollwert die Polaritäten an den Anschlüssen des Wechselrichters (5) fortwährend umgekehrt werden, und dass die Gruppe von Umschaltern ($K_1$–$K_6$, $Cm_1$–$Cm_3$) gemäss einer von der Übergangsbetriebsschaltung vorgegebenen Steuerung entsprechend Umschaltsequenzen gesteuert wird, die für jeden der besagten Vorgänge spezifisch sind.

2. Steuervorrichtung gemäss Anspruch 1, dadurch gekennzeichnet, dass der Gleichrichter (14; 1, 2, 3) mit Schaltelementen (15; $Th_1$, $K_1$, $K_2$, $K_3$, $K_4$, $K_5$, $K_6$) kombiniert ist, die die Konfiguration der Leistungsschaltung festlegen und durch ein Sequenzsteuerelement (12) gesteuert werden, dass dieses Sequenzsteuerelement (12) weitere Schaltelemente (Cm$_1$, Cm$_2$, Cm$_3$) steuert, die am Ausgang von Stromregelelementen (10, 11) und Sollwertgeneratoren (8, 9, 12, 16) entnommene Sollwerte auswählen, dass ein Teil der Schaltelemente (Cm$_1$) Sollwerte liefert, die die Steuersequenz des Gleichrichters (14; 1, 2, 3) bestimmen, und dass ein weiterer Teil der Schaltelemente (Cm$_2$, Cm$_3$) Sollwerte liefert, die über ein Synthesatorelement (13) den Statorkreisfrequenz-Wert ($\omega_1$) bestimmten, der durch Vorgabe der Polarität an den Anschlüssen des Wechselrichters (5) die Grösse und die Richtung des Drehmomentes der Asynchronmaschine (6) bestimmt.

3. Steuervorrichtung gemäss einem der vorhergehenden Ansprüche, dadurch gekennzeichnet, dass das Synthesatorelement (13) den modularen Wert der Rotorkreisfrequenz ($\omega_2$) bei normalem Betrieb über ein Rechenelement der Betriebsstation (9) erhält, und bei Übergangsbetrieb im Falle eines konstanten Wertes der Rotorkreisfrequenz ($\omega_2$) über ein Sollwertelement (16), oder im Falle eines variablen Wertes der Rotorkreisfrequenz ($\omega_2$) über das Stromregelelement (10) erhält.

4. Steuervorrichtung gemäss einem der vorhergehenden Ansprüche, dadurch gekennzeichnet, dass das Synthesatorelement (13) das Vorzeichen für den modularen Wert der Rotorkreisfrequenz ($\omega_2$) bei normalem Betrieb von einem Befehlsgeberelement (8) erhält, oder bei Übergangsbetrieb von dem Stromregelelement (10) erhält, nach Vergleich des in der Glättungsdrossel (4) fliessenden Stroms mit den bei dem Stromregelelement (10) vorliegenden Bezugswerten, oder über das mit dem Sequenzsteuerelement (12) kombinierte Befehlsgeberelement (8) erhält, um in bestimmten Fällen den verlängerten Übergangsbetrieb zu beenden.

5. Steuervorrichtung gemäss einem der vorhergehenden Ansprüche, dadurch gekennzeichnet, dass die Einschaltung der Thyristoren (T$_1$, T$_2$, T$_3$, T$_4$, T$_5$, T$_6$ oder Th$_1$, Th$_2$) des Umformers (14 oder 3) bei normalem Betrieb durch den Stromregler (11) gesteuert wird, nach Vergleich des in der Glättungsdrossel (4) fliessenden Stroms mit dem von einem Rechenelement der Betriebsstation (9) vorgegebenen modularen Wert des Stroms, und bei Übergangsbetrieb durch das Sequenzsteuerelement (12) gesteuert wird, in Abhängigkeit von dem in der Glättungsdrossel (4) fliessenden Strom oder der Spannung des Kondensators des Eingangsfilters (2) und dem Zustand der Schaltelemente (15; K$_1$, K$_2$, K$_3$; K$_4$, K$_5$, K$_6$).

6. Steuervorrichtung gemäss einem der vorhergehenden Ansprüche, dadurch gekennzeichnet, dass die durch das Sequenzsteuerelement (12) gesteuerten Umschalter (Cm$_1$, Cm$_2$, Cm$_3$) von der Position für den normalen Betrieb in die Position für den Übergangsbetrieb übergehen, wenn das Befehlsgeberelement (8) eine Umkehrung des geforderten Drehmomentes registriert, und von der Position für den Übergangsbetrieb in die Position für den normalen Betrieb übergehen, wenn das Sequenzsteuerelement (12) über die richtige Position der Schaltelemente (15; K$_1$, K$_2$, K$_3$; K$_4$, K$_5$, K$_6$) informiert wird.

7. Steuervorrichtung gemäss einem der vorhergehenden Ansprüche, dadurch gekennzeichnet, dass die durch das Sequenzsteuerelement (12) gesteuerten Umschalter (Cm$_1$, Cm$_2$, Cm$_3$) von der Position für den normalen Betrieb in die Position für den verlängerten Übergangsbetrieb übergehen, wenn das Sequenzsteuerelement (12) einen Vorgang registriert, durch den die Leistungsschaltung von der Primärquelle abgetrennt wird, und von der Position für den verlängerten Übergangsbetrieb in die Position für den normalen Betrieb übergehen, wenn das Sequenzsteuerelement (12) einerseits von dem Befehlsgeberelement (8) über die Anforderung eines positiven oder negativen Drehmomentes, und andererseits über die richtige Position der Schaltelemente (15; K$_1$, K$_2$, K$_3$; K$_4$, K$_5$, K$_6$) informiert wird.

8. Steuervorrichtung gemäss einem der vorhergehenden Ansprüche, dadurch gekennzeichnet, dass die durch das Sequenzsteuerelement (12) gesteuerten Umschalter (Cm$_1$, Cm$_2$, Cm$_3$) von der Position für den normalen Betrieb in die Position für den verlängerten Übergangsbetrieb übergehen, wenn das Sequenzsteuerelement (12) über geeignete Fühler einen anormalen Wert des in der Glättungsdrossel (4) fliessenden Stroms und/oder der Spannung an den Anschlüssen des Kondensators des Eingangsfilters (2) registriert, und von der Position für den verlängerten Übergangsbetrieb in die Position für den normalen Betrieb übergehen, wenn das Sequenzsteuerelement (12) einerseits von dem Befehlsgeberelement (8) über die Anforderung eines positiven oder negativen Drehmomentes, und andererseits über die richtige Position der Schaltelemente (15; K$_1$, K$_2$, K$_3$; K$_4$, K$_5$, K$_6$) informiert wird, sofern geeignete Fühler dem Sequenzsteuerelement (12) melden, dass die Störung nicht mehr vorhanden ist.

**Fig.1**

0 069 171

Fig. 2

0 069 171

Fig.3

0 069 171

Fig.4

Fig.5

Fig.6

0 069 171

23

0 069 171

Fig.7

Fig.8

Fig.9

0 069 171

29

0 069 171

Fig.10

31

Fig.11

0 069 171

33

0 069 171

Fig. 12

35

Fig. 13